# EUROPÄISCHE PATENTSCHRIFT

(11) **EP 2 296 838 B1**
(45) Veröffentlichungstag und Bekanntmachung des Hinweises auf die Patenterteilung: **22.01.2014**
(21) Anmeldenummer: 09753709.6
(22) Anmeldetag: 30.03.2009
(51) Int. Cl.: B23D 51/02, B23D 55/08

(54) **HANDGEFÜHRTE WERKZEUGMASCHINE**
HAND-GUIDED MACHINE TOOL
MACHINE-OUTIL À MAIN

(30) Priorität: 29.05.2008 DE 102008002066
(43) Veröffentlichungstag der Anmeldung: 23.03.2011
(73) Patentinhaber: Robert Bosch GmbH, 70442 Stuttgart (DE)
(72) Erfinder: DELFINI, Stefano, CH-2544 Bettlach (CH); KOEDER, Thilo, 70839 Gerlingen (DE); PLATZER, Joachim, 71686 Remseck-Hochberg (DE); HOFFMANN, Ulli, 75223 Niefern-Oeschelbronn (DE)
(86) Internationale Anmeldenummer: PCT/EP2009/053709
(87) Internationale Veröffentlichungsnummer: WO 2009/144054

(56) Entgegenhaltungen:
- WO-A-02/22297
- DE-A1-102007 005 581
- JP-A- 62 203 716

## Beschreibung

Die Erfindung betrifft eine handgehaltene Werkzeugmaschine, in Form einer Stichsäge und mit einer Querführung für das Sägeblatt, gemäß dem Oberbegriff des Anspruches 1.

### Stand der Technik

Werkzeugmaschinen in Form von Stichsägen mit einer solchen Querführung sind beispielsweise aus der WO02/22297 A1 bekannt. Die Querführung ist bei dieser Lösung im Bereich der Fußplatte der als Stichsäge ausgebildeten handgeführten Werkzeugmaschine angeordnet und verkürzt die freie Führungslänge des Sägeblattes zwischen der maschinenseitigen Sägeblattaulnahme und der Fußplatte. Dadurch wird das Sägeblatt in Querrichtung stabilisiert und dessen Tendenz zum Ausbiegen in Querrichtung verringert und es wird dadurch auch dem Verlaufen des sägeblattes entegegengewirkt. Dies alles trägt dazu bei, Abweichungen von einer gewollten Schnittrichtung und Schnittführung zu vermeiden und möglichst gute Arbeizsergebnisse zu erreichen.

Auch mit solchen systemen zur Querführung werden die mit dem Verlaufen des Sägeblattes einhergehenden Probleme aber nur vermindert.

Wie sich gezeigt hat, verläuft, das heißt wandert das jeweilige Sägeblatt zuerst, bezogen auf ein Werkstück als Schnittgut an der jeweiligen Werkstüchkunterseite aus der durch die oberseitige Schnittkante verlaufenden und bestimmten, theoretischen Schnittebene aus, bezogen auf einen Zugriff des Sägeblattes auf das Werkstück ausgehend von der Oberseite.

Dementsprechend wird für den Benutzer ein solches Verlaufen des Sägeblattes erst erkennbar, wenn die abweichung auch an der Werkstück-Obesseite sichtbar wird. An der Werkstück-Unterseite sind dann schon verhältnismäßig große Abweichungen der Schnittkante von der theoretischen Schnittebene gegebe. Daraus folgt, dass für den Benutzer einer solchen auf das Werkstück aufgesetzten Stichsäge das Verlaufen des Sägeblattes erst dann erkennbar ist, und damit auch seilens des Benutzers entsprechende Eingriffsmöglichkeiten eröffnet sind, wenn bereits ein stärkerer "Verlauf" des Sägebtattes und damit ein beträchtlicher Fehler vorliegt.

Entsprechende Probleme sind grundsätzlich auch bei Bandsägen gegeben.

Aus der DE 10 2007 005 581 A1 sind eine Bandsäge sowie ein Verfahren zum Positionieren eines Bandsägeblatts im Raum bekannt. Die Bandsäge der DE 10 2007 005 581 A1 weist ein Bandsägeblatt auf, gegen das ein Sägegut in einer Vorschubrichtung führbar ist. Eine Führung für das Bandsägeblatt weist mindestens einen Magneten auf, der eine die Position (d) des Bandsägeblatts im Raum beeinflussende Kraft auf das Bandsägeblatt ausübt. Der mindestens eine Magnet ist in seiner Kraftwirkung einstellbar und die Kraft ist quer zur Vorschubrichtung gerichtet. Das Verfahren zum Positionieren des Bandsägeblatts der DE 10 2007 005 581 A1 wird ausgeführt, während ein Sägegut in einer Vorschubrichtung gegen das Bandsägeblatt geführt wird. Eine Magnetkraft wird dabei auf das Bandsägeblatt ausgeübt. Die Magnetkraft und dadurch eine Position des Bandsägeblatts werden quer zur Vorschubrichtung eingestellt.

Die JP 62 203719 A zeigt eine Bandsäge, bei der eine Bewegung des Sägeblattes durch einen Kontaktsensor detektiert wird. Die Bewegung des Kontaktsensors wird ermittelt und daraus ein Stellsignal für einen Elektromotor generiert, um die Führung des Sägeblattes in entsprechender Weise zu stellen.

### Offenbarung der Erfindung

Der Erfindung liegt die Aufgabe zugrunde, bezogen auf Werkzeugmaschinen der eingangs genannten Art eine weitere Möglichkeit autzuzeigen, wie dom Verlaufen des Sägeblattes entgegenzuwirken ist, insbesondere auch ein Verlaufen des Sägeblattes zumindest nahezu vollstandig zu verbindern ist.

Erreicht wird dies erfindungsgemäß durch eine handgeführte Werkzeugmaschine in Form einer Stücksäge gemäß Anspruch 1. Das Sägeblatt wird über die Querführung in Abhängigkeit von auf das Sägeblatt wirkenden Quer- und/oder Torsionskräften um seine Längsachse zwangsgeführt verdreht und/oder in Bezug aut seine Längsachse tordiert, wobei eine solche zwangsgeführte Verdrehung oder Torsion zur Verminderung des Verlautens des Sägeblattes insbesondere durch Verdrehung oder Torsion in zur Quer und/oder Torsionskraft entgegengesetzter RichLunq erfolgt.

Eine solche Lösung lässt sich gegebenfalls ergänzend zur bekannten Querführung und Querabstützüng des Sägeblattes realisieren, und zwar mit Mitteln, wie sie in Verbindung mit den bekannten Lösungen zur Querführung und Querabstützung, beispielsweise aus der WO02/22297 A1 oder aus der WO03/106087 A1, bekannt, sind. Somit können auch im Rahmen der Erfindung zur Verdrehung oder Torsion des Sägeblattes zweckmäßigerweise Führungselemente eingesetzt werden, die dieses, insbesondere an die Flachseiten punktuell oder flächig angelegt, beaufschlagen, wobei eine Torsion des Sägeblattes insbesondere für flexible Bandsägeblätter in Frage kommen.

Als solche Führungselemente können Führungsbacken, Führungsrollen oder dergleichen dienen, wobein es insbesondere zweckmäßig ist, dic Führungsclemente Stützarmen zuzuordnen und über die Stützarme flächig oder punktuell an die Flachseiten des Sägeblattes anzulegen. Die Stützarme können als einarmige Hebel jeweils separat gelagert sein, oder wie bei Zangen üblich überkreuzend, in einer gemeinsamen Lagerung verbunden und abgestützt sein.

Die Erfassung der Quer und/oder Torsionskräfte kann dadurch erfolgen, dass die Führungselemente selbst als Messglieder ausgebildet sind, oder Messglieder tragen. Ferner auch dadurch erfolgen, dass das über die Stützarme übertragene Drechmonment, erfasst wird.

Entsprechend kann auch bei in Längsrichtung einseiting zum Arbeitsbereich des Sägeblattes vorgesehener Führung bei Stichsägen, insbesondere die Erfassung von Torsionskräften, aber auch von Querkrätten über in Richtung der Längsachse beabstandete Messglieder erfolgen.

Im Rahmen der Erfindung können für die angestrebte Kompensation der zum Verläufen des Sägeblattes führenden Einflüsse schon kleine, gegebenenfalls auch sehr kleine Drehwinkel ausreichen. Drechwinkel dieser Größenordnung entsprechen fallweise dem in der antriebsseitigen Führung und/oder Abstützung des Sägeblattes, so insbesondere dem in der unverdrehbaren Führung einer das Sägeblatt abstützenden Hubstange gegebenen Drehspiel. Dementsprechend kann auch mit Verdrehspielen gearbeitet werden. Bei entsprechenden fertigungsbedingten Drehspielen kann deshalb für die in der Betätigung des Sägeblattes liegende und das Sägeblatt führende Hubstange auf die gezielte Realisierung eines entsprechenden Freiheitsgrades in der Hubstangentührung bzw. in der Sägesblattführung gegebenerfalls verzichtel werden. Entsprechende Möglichkeiten bieten auch in der Sägeblattaufnahme gegebene oder bewusst vorgegebene Drehspiele.

Darüber hinaus liegt es auch im Rahmen der Erfindung, gegebenenfalls durch gezielte Elastizitäten in der Hubstangenführung und/oder in der Sägeblattaufnahme sicherzustellen, dass einerseits die Querführung des Sägeblattes und dessen Ausrichtung auf eine vorgegebene Drehlage nicht beeinträchtigt ist, andererseits aber eine Verdrehung des Sägeblattes um seine Längsachse im aufgezeigten Maße möglich ist.

Die erfindungsgemäß vorgeschene Drehwinkel-Verstellbarkeit für das Sägeblatt durch Querkraftbeaufschlagung über eine Querabstützung des Sägeblattes kann unabhängig von oder gegebenenfalls auch ergänzend zur für die Korrekzur des Schnittverlaufes vorgegebenen Querkraftbeaufschlagung des Sägeblattes genutzt werden, um im Sägebetrieb, insbesondere auch beim Ansägen, Abweichungen von der gewünschlen oder vorgegebenen Soll Arbeitslinic zu korrigieren. Gegebenenfalls auch dazu, solche Soll-Arbeitslinien autonom oder halbanlonom nachzufahren, die keine größeren Abweichungen von der Geradeaus-Arbeitsrichtung bedingen.

Sind größere Abweichungen von der Gerade-Arbeitsrichtung gewünscht oder nötig, so kann für diesen Zweck die Drehkraftbeaufschlagung über die Querabstützung um eine im Bereich der Längsachse des Sägeblattes liegende oder mit dieser zusammen Fallende Drohachse auch genutzt werden, das Sägeblatt in entsprechende Winkelstellungen zur Geradeaus-Arbeitsrichtung zu verdrehen, unter der Voraussetzung, dass die drehfeste Festlegung des Sägeblattes auf seine Ceradeaus-Arbeitsstellung aufgehoben ist. Dies beispielsweise durch gezielte Freigabe des entsprechenden Freiheitsgrades, so beispielsweise durch Aufhebung der Drehfixierung zwischen Sägeblatt und zugehöriger Hubstange, in der Sägeblattaufnahme oder durch Lösen der Drehstellungsverriegelung für die Hubstange.

Somit, ist erfindungsgemäß auch eine weitere Lösung für einen Betrieb einer Stichsäge im Scrolling Modus geschaffen, ohne dass aufwändige Zusatzeirichtungen erforderlich sind.

In Verbindung mit einer Anordnung und/oder Einrichtung zur Verfolgung einer Wegvorgabe, zum Beispiel einer sensorischen Erfassungseinbeit. Für die Erfassung der Wegvorgabe und nachfolgender Steuereinrichung, lässt sich so auch ein Betrieb mit. autonomer oder halbautonomer Führung der Stichsäge realisieren.

Die Erfindung betrifft des Weiteren ein verfahren für eine handgeführte Werkzeugmaschine in Form einer Stichsäge, bei der in Abhängigkeit von der auf das Sägeblatt wirkenden Quer-, Dreh- und/oder Torsionskraft die Drehstellung des Sägeblattes soweit geändert oder das Sägeblatt soweit tordiert wird, dass ein querkraftbedingtes Verlaufen des Sägeblattes vermieden wird.

Weitere Vorteile und zweckmäßige Ausführungen sind den weiteren Ansprüchen, der Figurenbeschreibung und den Zeichnungen zu entnehmen. Es zeigen:
- Fig. 1: eine schematisierte Dartellung einer handgeführten Werkzeugmaschine in Form einer Stichsäge,

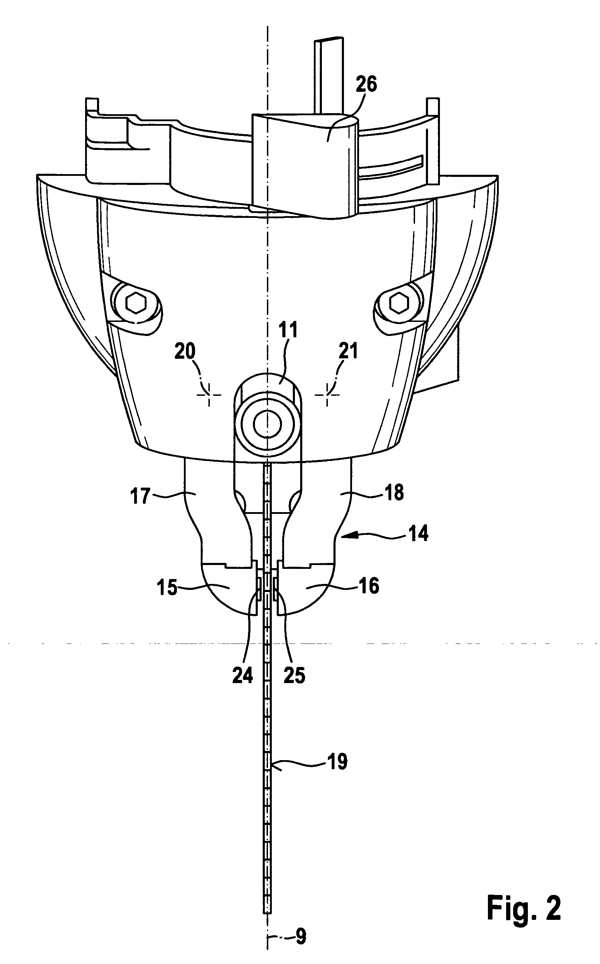

- Fig. 2: einen Ausschnitt 1 aus Fig. 1 in einer Frontalansicht der Stichsage,
- Fig. 3: im Schema die Qucrführunq der Stichsäge, aktiv verstellbar um eine zur Tängsachse des Sägeblattes parallele, bevorzugt benachbarte Drehachase,
- Fig. 4: ein Schnitt durch eine Hubstangenführung, in der die Hubstange axial verschieblich und in Umfangsrichtung durch elastische Abstützung drehwinkelbegrenzt gehalten ist.

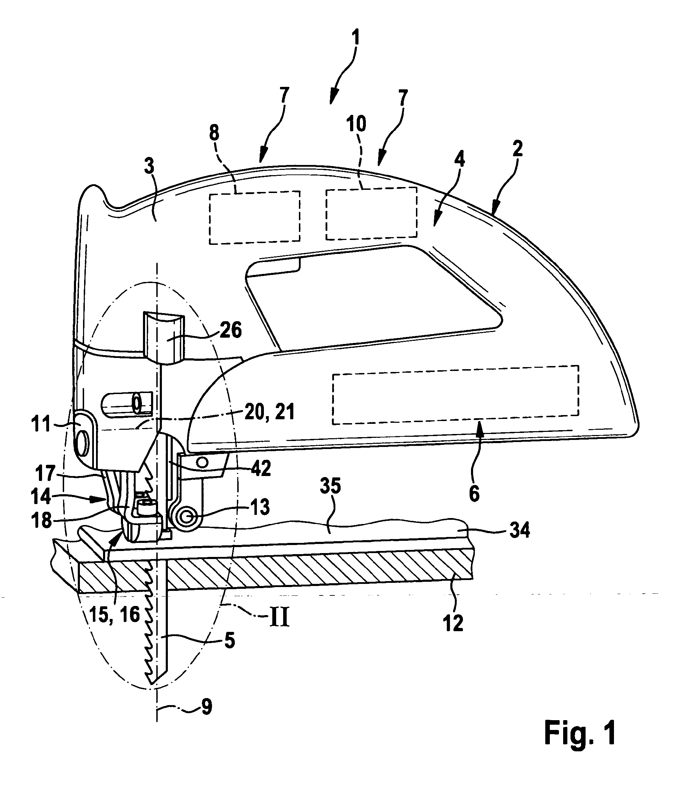

Fig. 1 veranschaulicht eine Werkzeugmachine 1 in Form einer handgeführten Stichsäge 2 mit einem Gehäuse 3 und einem sich in Längsrichtung der Stichsäge 2 erstreckenden, einen Teil des Gehäuses 2 bildenden Griffteil 1. Frontseitig weist die Stichsage 2 einen Koptbereich auf, in dem als Werkzeug ein bubdeweglich angetriebenes Sägeblatt 5 vorgeschen ist. Die elektromotorische Antriebseinheit für dic Stichsäge 2 ist bei 6 schematisch angedeutet und vom Gehäuse 3 aufgenommen. Im Gehäuse 3 sind weiter auch noch Stell-und Steuermittel 7 vorgesehen, die unter anderem eine Aktuatorik 8 für dic Drehverstellung des Sägeblattes 5 um seine Längsachse 9 sowie auch eine Recheneinheit 10 umfassen, in der unter anderem aus einer Bildüberwachung - hier veranschaulicht als eine Sensorik 11, beispielsweise gestaltet als Kamera - gewonnene Ergebnisse verarbeitet und in Stellbefehle unter anderem für die Aktuatorik 8 umgesetzt werden können.

Die Sensorik 11 dient der Beobachtung des Arbeitsbereiches der Stichsäge 2 im Umfeld zum Sägeblatt 5 in dessen jeweiliger Eingriffslage auf ein hier symbolisch dargestelltes Werkstück 12. Das Sägeblatt 5 ist nahe seinem Zugriff auf das Werkstück 12 rückenseitig über Stützmittel 13 beaufschlagt, die eine Verdrehung des Sägeblattes 5 zulassen oder mit diesem mitdrehen und die beispielsweise durch eine Stützrolle gebildet sein können. In der Höhenlage benachbart zu den rückenseitigen Stützmitteln 13 ist für das Sägeblatt 5 eine Querführung 14 mit Führungselementen 15, 16 vorgesehen, die an Stützarmen 17, 18 angeordnet sind, deren um zu den Flachseiten 19 des Sägeblattes 5 parallel verlaufende Achsen 20, 21 schwenkbar sind. Diese sind nur schematisch angedeutet und die Stützarme 17, 18 sind über die nicht näher gezeigte Aktuatorik 8 gegeneinander quer zu den Flachseiten 19 des Sägeblattes 8 um die Achse 20, 21 verstellbar. Die Führungselemente 15, 16 sind vorliegend als Führungsbacken veranschaulicht, die gegen die Flachseiten 19 des Sägeblattes 5 über Gleitelemente 24, 25 anliegen. Im Rahmen der Erfindung liegt es auch, als Führungselemente 15, 16 Führungsrollen vorzusehen.

Die Stichsäge 2 kann in bekannter Weise sowohl als lediglich in Geradeaus-Arbeitsrichtung arbeitende Säge ausgebildet sein, wobei die Längsachse der Stichsäge 2 und die Längsachse 9 des Sägeblattes 5 in der Sägeblattebene liegen. Insbesondere bei dieser Ausrichtung der Sägeblattebene ist die Stichsäge 2 auch in einem sogenannten Pendelhubmodus zu betreiben, in dem das Sägeblatt 5 um eine quer zur Blattebene liegende Achse zusätzlich pendelnd angetrieben ist. Ferner ist auch eine Betriebsweise möglich, in der das Sägeblatt 5 um seine Längsachse 9 in zur Längsachse der Maschine winklige Arbeitsstellungen verschwenkbar ist.

Entsprechende Stelllagen für das Sägeblatt 5 lassen sich bei der schematisch veranschaulichten Anordnung über einen Schieber 26 insbesondere auch verriegelbar einstellen. Hierbei kann, was nicht gezeigt ist, das Sägeblatt 9 gegenüber dem aufnehmenden Kopfteil der Stichsäge 2 gedreht werden. Zu den verriegelbar zu fixierenden Drehstellungen gehört auch die der Geradeaus-Arbeitsrichtung entsprechende.

Die Stichsäge 2 ist mit einer Fußplatte 34 versehen, deren lagefeste Anordnung zum Gehäuse 3 über eine nur schematisch angedeutete Abstützung 35 veranschaulicht ist. Die Fußplatte 34 liegt auf dem Werkstück 12 auf. Grundsätzlich ist es auch möglich, eine entsprechende Abstützung gegen das Werkstück 12 über die Führungselemente 15, 16 bei entsprechender Ausgestaltung derselben unmittelbar vorzunehmen. Eine Auflage für das Werkstück 12 kann beispielsweise durch die Tischfläche eines Arbeitstisches gebildet sein.

Grundsätzlich ist die dargestellte Tischsäge 2 auch als Unterbaumaschine einzusetzen, wobei dann, bezogen auf die Darstellung gemäß Fig. 1, die Stichsäge 2 in umgekehrter Lage mit nach oben ragendem Sägeblatt 5 arbeitet.

Im Arbeitsbetrieb der Stichsäge 2 mit in das Werkstück 12 eingreifendem Sägeblatt 5 kann es zu einem "Verlaufen" des Sägeblattes 5 kommen. Dabei wandert das Sägeblatt 5 im Durchtrittsbereich durch das Werkstück 12 quer zur Sägeblattebene aus. Das bedeutet, dass die Schnittfläche im Werkstück 12 ausgehend von der Ansatzseite der Stichsäge als Oberseite schräg gegen die Unterseite des Werkstückes 12 verläuft. Das Sägeblatt 5 wird somit im Durchtrittsbereich durch das Werkstück seitlich ausgebogen.

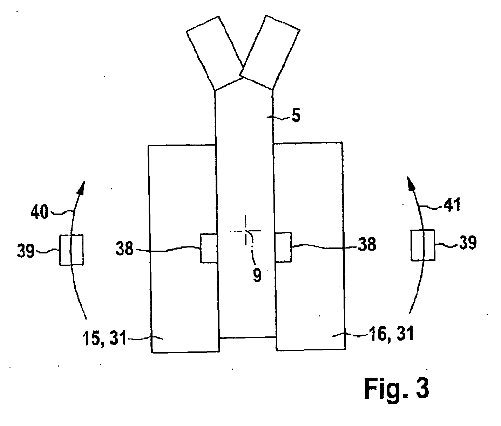

Aus dieser seitlichen Ausbiegung resultiereren Querkräfte, zumindest fallweise auch Torsionskräfte, die erfindungsgemäß erfasst werden, wobei diese Erfassung im Bereich der Führungselemente 15, 16, der Stützarme 17, 18, oder im Bereich von deren Lagerung (Achsen 20, 21) über entsprechende Messglieder 38, 39 oder auch über separat angeordnete Sensoren erfolgen kann. Solche Messglieder sind als in die Stützelemente 15, 16 integrierte Messglieder 38 in Fig. 3 symbolisch angedeutet. Es ist aber auch möglich, entsprechende Messglieder 39, ebenfalls symbolisch in Fig. 3 angedeutet, in Teilen der diesen zugeordneten Führung und Abstützung vorzusehen, so beispielsweise in die Stützarme 17, 18 zu integrieren oder den Stützarmen 17, 18 zugeordnet anzuordnen. Die Anordnung gemäß Fig. 3 veranschaulicht für die Messglieder 39 auch deren Lage beispielsweise als das Drehmoment erfassende Messglieder in oder um die Achsen 20, 21 der Stützarme 17, 18. Grundsätzlich ist die Erfassung auch bereits in der zugehörigen Stellaktuatorik möglich.

Von den Messgliedern, zum Beispiel von den Messgliedern 38, 39 erfasste Quer- und/oder Torsionskräfte werden als Daten in der Recheneinheit 10 verarbeitet und in Stellbefehle für die Aktuatorik umgesetzt. Die daraus resultierenden Drehbewegungen der Führungselemente 15, 16 sind in Fig. 3 als Drehbewegungen um die Längsachse 9 des Sägeblattes 5 durch die Pfeile 40, 41 veranschaulicht.

Der nutzbare Drehbereich ist verhältnismäßig klein. Entsprechende Drehwinkel liegen bei bis zu etwa 2°. Im Ergebnis hat eine solche querkraftabhängige Verdrehung des Sägeblattes 5 zur Folge, dass das "Verlaufen" des Sägeblattes 5, das wie vorstehend beschrieben detektiert und als Quer- und/oder Torsionskraft erfasst wurde, durch entsprechende Drehung des Sägeblattes 5 korrigiert wird, so dass das Sägeblatt 5 wiederum einem vorgegebenen Sollverlauf folgt.

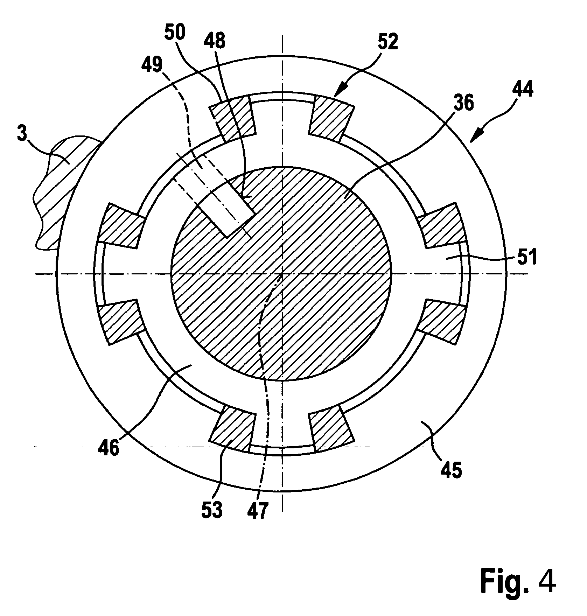

Die erfindungsgemäße Lösung ist vorstehend bezogen auf eine Hubsäge mit frei auslaufendem Sägeblatt 5, also eine herkömmlich ausgebildete Stichsäge, erläutert. Bei dieser ist das Sägeblatt 5 um seine Längsachse torsionssteif. Die Drehbeweglichkeit des Sägeblattes 5 wird im Regelfall innerhalb der auf das Sägeblatt 5 zugreifenden Antriebsanordnung realisiert, die beispielsweise eine Hubstange 36 umfasst, dargestellt in Fig. 4 und eine im Übergang des Sägeblattes 5 zur Hubstange 36 liegende Sägeblattaufnahme 42 (Fig. 1). Grundsätzlich kann - im Rahmen der geforderten geringen Auslenkungen - auch das torsionssteife Sägeblatt 5 im Rahmen seiner Elastizitätsgrenzen tordiert werden.

Realisiert kann eine solche Drehbeweglichkeit, die wie dargelegt nur kleine Drehwinkel abdecken muss, beispielsweise durch eine Anordnung gemäß Fig. 4. Der dort gezeigte Querschnitt durch die Hubstange 36 und eine Führungsanordnung 44 für die Hubstange 36 umfasst einen äußeren, beispielsweise zum Gehäuse 3 festgelegten Führungsring 45, der einen inneren Führungsring 46 umschließt, wobei die zueinander drehbaren Führungsringe 45 und 46 gegeneinander um die Achse 47 der Hubstange 36 verdrehbar sind und der innere Führungsring 46 drehfest, aber längsverschieblich zur Hubstange 36 festgelegt ist. Diese drehfeste, aber längsverschiebliche Verbindung zwischen innerem Führungsring 46 und Hubstange 36 kann beispielsweise durch eine Längsnut 48 in der Hubstange 36 und einen im inneren Führungsring lagefestgehaltenen Führungszapfen 49 erfolgen.

Die gegeneinander verdrehbaren Führungsringe 46, 47 weisen radial einander überlappende Bereiche auf, gebildet durch radiale Einschnitte 50 im äußeren Ring 45 und Vorsprünge 51 am inneren Führungsring 46, wobei die Vorsprünge 51 in Umfangsrichtung kürzer als die Einschnitte 50 sind, so dass in Umfangsrichtung dazwischen liegende Spalträume 52 entstehen. Deren Größe bestimmt den Verdrehbereich, wobei in den Spalträumen 52 erfindungsgemäß, wie im Ausführungsbeispiel 5 gezeigt, Stützkörper 53, insbesondere elastische Stützkörper 53 angeordnet sind, die eine Grundausrichtung au eine Mittellage vorgeben, drehmomentenablängig aber eine Verdrenung zulassen, so dass entsprechend der Querkraftbeaufschlagung des Sägeblattes 5 über die Führungselemente 15, 16 das Sägeblatt 5 mit der flubstange 36 verdreht werden kann.

Analog kann eine entsprechende Verdrehbarkeit auch in der Sägeblattaufnahme realisiert werden.

## Patentansprüche

1. Handgeführte Werkzeugmaschine (1) in Form einer Stichsäge (2), mit einer Querführung (14) für das Sägeblatt (5), **dadurch gekennzeichnet, dass** das Sägeblatt (5) über die Querführung (14) in Abhängigkeit von auf das Sägeblatt (5) wirkenden Quer- und / oder Torsionskräften um seine Längsachse (9) zwangsgeführt verdrehbar abgestützt ist.

2. Handgeführte Werkzeugmaschine nach Anspruch 1, **dadurch gekennzeichnet, dass** das Sägeblatt (5) über die Querführung (14) gegensinnig zu den auf das Sägeblatt (5) wirkenden Quer- und/oder Torsionskräften abgestützt ist

3. Handgeführte Werkzeugmaschine In Form einer Stichsäge (2), nach einem der Ansprüche 1 oder 2, **dadurch gekennzeichnet, dass** das Sägeblatt (5) über die Querführung (14) in Abhängigkeit von auf das Sägeblatt (5) wirkenden Quer- und/oder Torsionskräften insbesondere in Bezug auf seine Längsachse (9) tordiert wird.

4. Handgeführte Werkzeugmaschine in Form einer Stichsäge (2) nach Anspruch 3, dadurch gekennzeichet, dass das Sägeblatt (5) über die Querführung (14) gegensinnig zu den auf das Sägeblatt (5) wirkenden Quer- und/oder Torsionskräften tordiert wird.

5. Handgeführte Werkzeugmaschine in Form einer Stichsäge (2) nach einem der Ansprüche 1 bis 4, **dadurch gekennzeichnet, dass** zur Abstützung der Quer- und/oder Torsionskräfte den Flachseiten (19) des Sägeblattes (5) zugeordnete Führungselemente (15, 30; 16, 31) vorgesehen sind.

6. Handgeführte Werkzeugmaschine in Form einer Stichsäge (2) nach Anspruch 5, **dadurch gekennzeichnet, dass** die Führungselemente (15, 30; 16, 31) durch Führungsrollen gebildet sind.

7. Handgeführte Werkzeugmaschine in Form einer Stichsäge (2) nach Anspruch 6, **dadurch gekennzeichnet, dass** die Führungselemente (15, 30; 16, 31) durch Führungsbacken gebildet sind.

8. Handgeführte Werkzeugmaschine in Form einer Stichsäge (2) nach einem der Ansprüche 5 bis 7, **dadurch gekennzeichnet, dass** die Führungselemente (15, 30; 16, 20 31) zangenartig auf die Flachseite (19) des Sägeblattes (5) zugreifen.

9. Handgeführte Werkzeugmaschine in Form einer Stichsäge (2) nach einem der vorhergehenden Ansprüche, **dadurch gekennzeichnet, dass** die Führungselemente (15, 30; 16, 25, 31) Messglieder (38) zur Erfassung der Querkraft enthalten.

10. Handgeführte Werkzeugmaschine in Form einer Stichsäge (2) nach einem der Ansprüche 5 bis 8, **dadurch gekennzeichnet, dass** die Führungselemente (15, 30; 16,31) Messglieder (38) bilden.

11. Handgeführte Werkzeugmaschine in Form einer Stichsäge (2) nach einem der Ansprüche 1 bis 10, **dadurch gekennzeichnet, dass** deren hubbeweglich angetriebenes Sägeblatt (5) in Drehrichtung spielbehaftet abgestützt ist

12. Handgeführte Werkzeugmaschine In Form einer Stichsäge (2) nach Anspruch 13, **dadurch gekennzeichnet, dass** bei über eine Hubstange (36) abgestütztem Sägeblatt (5) die Hubstange (36) auf eine vorgegebene Drehlage spielbehaftet abgestützt ist.

13. Handgeführte Werkzeugmaschine in Form einer Stichsäge (2) nach einem der Ansprüche 1 bis 12, **dadurch gekennzeichnet, dass** das über eine Sägeblattaufnahme (42) mit der Hubstange (36) verbundene Sägeblatt (5) in Drehrichtung spielbehaftet mit der Sägeblattaufnahme (42) verbunden ist.

14. Handgeführte Werkzeugmaschine in Form einer Stichsäge (2) nach Anspruch 12 und/oder 13, **dadurch gekennzeichnet, dass** das Drehspiel durch eine in Drehrichtung elastische Abstützung wegbegrenzt vorgegeben ist.

15. Arbeitsverfahren zum Betreiben einer handgeführten Werkzeugmaschine (1) in Form einer Stichsäge (2) mit einer Querführung für das Sägeblatt (5), gemäß einem der Ansprüche 1 bis 14, **dadurch gekennzeichnet, dass** das Sägeblatt (5) in Abhängigkeit von auf das Sägeblatt (5) wirkenden Quer und/ oder Torsionskräften gegensinnig zu diesen Kräften um seine Längsachse (9) stellkraftbeaufschlagt verdreht und/oder in Bezug auf seine Längsachse (9) tordiert wird.

## Claims

1. Hand-held power tool (1) in the form of a jigsaw (2), having a transverse guide (14, 29) for the saw blade (5), **characterized in that** the saw blade (5) is rotatably supported in a positively driven manner about its longitudinal axis (9) via the transverse guide (14), depending on transverse and/or torsional forces acting on the saw blade (5).

2. Hand-held power tool according to Claim 1, **characterized in that** the saw blade (5, 27) is supported via the transverse guide (14, 29) in the opposite direction to the transverse and/or torsional forces acting on the saw blade (5, 27).

3. Hand-held power tool in the form of a jigsaw (2) according to either of Claims 1 and 2, **characterized in that** the saw blade (5, 27) is twisted, in particular with respect to its longitudinal axis (9), via the transverse guide (14, 29) depending on transverse and/or torsional forces acting on the saw blade (5, 27).

4. Hand-held power tool in the form of a jigsaw (2) according to Claim 3, **characterized in that** the saw blade (5, 27) is twisted via the transverse guide (14, 29) in the opposite direction to the transverse and/or torsional forces acting on the saw blade (5, 27).

5. Hand-held power tool in the form of a jigsaw (2) according to one of Claims 1 to 4, **characterized in that** guide elements (15, 30; 16, 31) assigned to the flat sides (19) of the saw blade (5, 27) are provided in order to absorb the transverse and/or torsional forces.

6. Hand-held power tool in the form of a jigsaw (2) according to Claim 5, **characterized in that** the guide elements (15, 30; 16, 31) are formed by guide rollers.

7. Hand-held power tool in the form of a jigsaw (2) according to Claim 6, **characterized in that** the guide elements (15, 30; 16, 31) are formed by guide jaws.

8. Hand-held power tool in the form of a jigsaw (2) according to one of Claims 5 to 7, **characterized in that** the guide elements (15, 30; 16, 20, 31) engage in a pincer-like manner with the flat side (19) of the saw blade (5, 27).

9. Hand-held power tool in the form of a jigsaw (2) according to one of the preceding claims, **characterized in that** the guide elements (15, 30; 16, 25, 31) contain measuring elements (38) for recording the transverse force.

10. Hand-held power tool in the form of a jigsaw (2) according to one of Claims 5 to 8, **characterized in that** the guide elements (15, 30; 16, 31) form measuring elements (38).

11. Hand-held power tool in the form of a jigsaw (2) according to one of Claims 1 to 10, **characterized in that** the saw blade (5) thereof, which is driven with a reciprocating motion, is supported with play in the direction of rotation.

12. Hand-held power tool in the form of a jigsaw (2) according to Claim 13, **characterized in that** when the saw blade (5) is supported via a reciprocating rod (36), the reciprocating rod (36) is supported with play with respect to a predetermined rotational position.

13. Hand-held power tool in the form of a jigsaw (2) according to one of Claims 1 to 12, **characterized in that** the saw blade (5) connected to the reciprocating rod (36) via a saw-blade receptacle (42) is connected to the saw-blade receptacle (42) with play in the direction of rotation.

14. Hand-held power tool in the form of a jigsaw (2) according to Claim 12 and/or 13, **characterized in that** the rotary play is predetermined over a limited path by an elastic support in the direction of rotation.

15. Procedure for operating a hand-held power tool (1) in the form of a jigsaw (2) having a transverse guide for the saw blade (5, 27) according to one of Claims 1 to 14, **characterized in that**, depending on transverse and/or torsional forces acting on the saw blade (5, 27), the saw blade (5, 27) is rotated about its longitudinal axis (9) by application of a positioning force and/or is twisted with respect to its longitudinal axis (9) in the opposite direction to these forces.

## Revendications

1. Machine-outil à main (1) sous la forme d'une scie sauteuse (2), comprenant un guide transversal (14, 29) pour la lame de scie (5), **caractérisée en ce que** la lame de scie (5) est supportée au moyen du guide transversal (14) de manière à pouvoir tourner de manière guidée de façon forcée autour de son axe longitudinal (9) en fonction de forces transversales et/ou de torsion agissant sur la lame de scie (5).

2. Machine-outil à main selon la revendication 1, **caractérisée en ce que** la lame de scie (5, 27) est supportée au moyen du guide transversal (14, 29) en sens inverse aux forces transversales et/ou de torsion agissant sur la lame de scie (5, 27).

3. Machine-outil à main sous la forme d'une scie sauteuse (2), selon la revendication 1 ou 2, **caractérisée en ce que** la lame de scie (5, 27) est tordue, en particulier par rapport à son axe longitudinal (9), au moyen du guide transversal (14, 29) en fonction de forces transversales et/ou de torsion agissant sur la lame de scie (5, 27).

4. Machine-outil à main sous la forme d'une scie sauteuse (2) selon la revendication 3, **caractérisée en ce que** la lame de scie (5, 27) est tordue au moyen du guide transversal (14, 29) en sens inverse aux forces transversales et/ou de torsion agissant sur la lame de scie (5, 27).

5. Machine-outil à main sous la forme d'une scie sauteuse (2) selon l'une quelconque des revendications 1 à 4, **caractérisée en ce que** des éléments de guidage (15, 30 ; 16, 31) associés aux côtés plats (19) de la lame de scie (5, 27) sont prévus pour supporter les forces transversales et/ou de torsion.

6. Machine-outil à main sous la forme d'une scie sauteuse (2) selon la revendication 5, **caractérisée en ce que** les éléments de guidage (15, 30 ; 16, 31) sont formés par des rouleaux de guidage.

7. Machine-outil à main sous la forme d'une scie sauteuse (2) selon la revendication 6, **caractérisée en ce que** les éléments de guidage (15, 30 ; 16, 31) sont formés par des mâchoires de guidage.

8. Machine-outil à main sous la forme d'une scie sauteuse (2) selon l'une quelconque des revendications 5 à 7, **caractérisée en ce que** les éléments de guidage (15, 30 ; 16, 20, 31) agrippent à la manière de pinces le côté plat (19) de la lame de scie (5, 27).

9. Machine-outil à main sous la forme d'une scie sauteuse (2) selon l'une quelconque des revendications précédentes, **caractérisée en ce que** les éléments de guidage (15, 30 ; 16, 25, 31) comprennent des organes de mesure (38) pour détecter la force transversale.

10. Machine-outil à main sous la forme d'une scie sauteuse (2) selon l'une quelconque des revendications 5 à 8, **caractérisée en ce que** les éléments de guidage (15, 30 ; 16, 31) forment des organes de mesure (38).

11. Machine-outil à main sous la forme d'une scie sauteuse (2) selon l'une quelconque des revendications 1 à 10, **caractérisée en ce que** sa lame de scie (5) entraînée suivant un mouvement de va-et-vient est supportée avec jeu dans le sens de rotation.

12. Machine-outil à main sous la forme d'une scie sauteuse (2) selon la revendication 13, **caractérisée en ce que** dans le cas d'une lame de scie (5) supportée au moyen d'une tige à mouvement de va-et-vient (36), la tige à mouvement de va-et-vient (36) est supportée avec jeu par rapport à une position angulaire prédéfinie.

13. Machine-outil à main sous la forme d'une scie sauteuse (2) selon l'une quelconque des revendications 1 à 12, **caractérisée en ce que** la lame de scie (5) reliée à la tige à mouvement de va-et-vient (36) au moyen d'un logement de lame de scie (42) est reliée au logement de lame de scie (42) avec jeu dans le sens de rotation.

14. Machine-outil à main sous la forme d'une scie sauteuse (2) selon la revendication 12 et/ou 13, **caractérisée en ce que** le jeu en rotation est prédéfini sur une course limitée par un support élastique dans le sens de rotation.

15. Procédé de travail pour faire fonctionner une machine-outil à main (1) sous la forme d'une scie sauteuse (2) comprenant un guide transversal pour la lame de scie (5, 27), selon l'une quelconque des revendications 1 à 14, **caractérisé en ce que** la lame de scie (5, 27) est, en fonction de forces transversales et/ou de torsion agissant sur la lame de scie (5, 27), tournée autour de son axe longitudinal (9) sous l'effet d'une force de réglage et/ou est tordue par rapport à son axe longitudinal (9) en sens inverse à ces forces transversales et/ou de torsion.
